(19) Europäisches Patentamt
European Patent Office
Office européen des brevets

(11) **EP 3 696 508 A2**

(12) **EUROPÄISCHE PATENTANMELDUNG**

(43) Veröffentlichungstag:
**19.08.2020  Patentblatt 2020/34**

(51) Int Cl.:
***G01C 21/32** (2006.01)*  ***G01C 21/36** (2006.01)*
***G08G 1/01** (2006.01)*

(21) Anmeldenummer: **20153077.1**

(22) Anmeldetag: **22.01.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **23.01.2019  DE 102019101639**

(71) Anmelder: **Deutsches Zentrum für Luft- und Raumfahrt e.V.**
**51147 Köln (DE)**

(72) Erfinder: **KLARNER, Robert**
**80331 München (DE)**

(74) Vertreter: **Rösler Rasch van der Heide & Partner Bodenseestraße 18**
**81241 München (DE)**

(54)     **SYSTEM ZUM UPDATE VON NAVIGATIONSDATEN**

(57)     Die Erfindung betrifft ein System zum Update von Navigationsdaten umfassend: eine in einem Netzwerk (101) verteilte Datenbank, in der Navigationsdaten für Fahrzeuge F (102) gespeichert sind, die sich in einem Verkehrswegenetz bewegen, wobei die Navigationsdaten für Positionen POS in dem Verkehrswegenetz jeweils eine Anzahl M(POS) den Positionen POS zugeordnete Attribute $ATT_m$(POS) umfassen, die eine Umgebung der jeweiligen Position POS beschreiben und die für alle Position POS die Menge {$ATT_{m=1,...M}$(POS)} bilden; eine Positionsermittlungseinrichtung (103) je Fahrzeug F (102); eine Anzahl $N_F$ von Sensoren $SEN_{F,n_F}$ (104) je Fahrzeug F (102), die Sensordaten

$$DAT_{SEN_{F,n_F}}(POS_F,t)$$ jeweils von einer aktuellen Umgebung der jeweiligen Fahrzeuge F (102) an ihren aktuellen Positionen $POS_F$(t) ermitteln, und/oder eine Anzahl $R_{Inf}$ von im Verkehrswegenetz an Positionen $POS_{SEN_{r_{inf}}}$ angeordneten Infrastruktursensoren $SEN_{r_{inf}}$ (105), die Sensordaten $$DAT_{SEN_{r_{inf}}}(POS_{SEN_{r_{inf}}},t)$$ jeweils von einer aktuellen Umgebung der jeweiligen Infrastruktursensoren $SEN_{r_{inf}}$ (105) ermitteln; eine Auswerteeinheit (106), und eine Filtereinrichtung (107), die mit der Auswerteeinrichtung (106) verbunden oder verbindbar ist und die mit dem Netzwerk (101) kommuniziert, wobei die Filtereinrichtung (107) derart ausgeführt und eingerichtet ist, dass sie für alle in Klasse 2

klassifizierten Differenzattribute $\Delta ATT_{SEN_F}$($POS_F$,t), $\Delta ATT_{SEN_{r_{inf}}}(POS_{SEN_{r_{inf}}},t)$ automatisiert und individuell die Erfüllung eines oder mehrerer vorgegebener Kriterien prüft und abhängig von der individuellen Erfüllung dieser Kriterien einen Transaktionsdatensatz zur entsprechenden Änderung der Navigationsdaten an das Netzwerk (101) sendet.

**EP 3 696 508 A2**

Fig. 1

**Beschreibung**

Die Erfindung betrifft ein System zum Abgleich und Update von Navigationsdaten für Fahrzeuge F, die ein Verkehrswegenetz beschreiben, in dem sich die Fahrzeuge F bewegen.

Die Aufgabe der Erfindung ist es, ein System zum Update von Navigationsdaten bereitzustellen, das es ermöglicht, Updates der Navigationsdaten einfach, sicher und nachvollziehbar durchzuführen, sodass die die Fahrzeuge auf hinreichend aktuelle Navigationsdaten Zugriff haben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe wird gelöst durch ein System zum Abgleich und Update von Navigationsdaten umfassend:

- eine in einem Netzwerk verteilte Datenbank (Navigationsdatenbank), in der Navigationsdaten für Fahrzeuge F gespeichert sind, die sich in einem Verkehrswegenetz bewegen, wobei die Navigationsdaten für Positionen POS in dem Verkehrswegenetz jeweils eine Anzahl M(POS) den Positionen POS zugeordnete Attribute $ATT_m(POS)$ umfassen, die eine Umgebung der jeweiligen Position POS beschreiben und die für alle Position POS die Menge $\{ATT_{m=1,...M}(POS)\}$ bilden, mit m = 1, 2, ..., M; M = M(POS) und M(POS) $\geq$ 0;

- eine Positionsermittlungseinrichtung je Fahrzeug F, die die aktuelle Positionen $POS_F(t)$ des jeweiligen Fahrzeugs F ermittelt, mit t: Zeit;

- eine Anzahl $N_F$ von Sensoren $SEN_{F,n_F}$ je Fahrzeug F, die Sensordaten $DAT_{SEN_{F,n_F}}(POS_F, t)$ jeweils von einer aktuellen Umgebung der jeweiligen Fahrzeuge F an ihren aktuellen Positionen $POS_F(t)$ ermitteln, mit $n_F$ = 1, ..., $N_F$ und $N_F \geq 1$, und/oder eine Anzahl $R_{Inf}$ von im Verkehrswegenetz an Positionen $POS_{SEN_{rinf}}$ angeordneten Infrastruktursensoren $SEN_{rinf}$, die Sensordaten $DAT_{SEN_{rinf}}(POS_{SEN_{rinf}}, t)$ jeweils von einer aktuellen Umgebung der jeweiligen Infrastruktursensoren $SEN_{rinf}$ ermitteln, mit $r_{inf}$ = 1, ..., $R_{Inf}$ und $R_{Inf} \geq 1$;

- eine Auswerteeinheit, die dazu ausgeführt ist durch Auswertung der Sensordaten $DAT_{SEN_{F,n_F}}(POS_F, t)$ eine Menge $\{ATT_{SEN_F}(POS_F, t)\}$ aktueller Attribute $ATT_{SEN_F}(POS_F, t)$ der Umgebungen von $POS_F$ und/oder durch Auswertung der ermittelten Sensordaten $DAT_{SEN_{rinf}}(POS_{SEN_{rinf}}, t)$ eine Menge $\{ATT_{SEN_{rinf}}(POS_{SEN_{rinf}}, t)\}$ aktueller Attribute $ATT_{SEN_{rinf}}(POS_{SEN_{rinf}}, t)$ der Umgebungen von $SEN_{rinf}$ zu ermitteln, die Differenzmenge $\{\Delta ATT_{SEN_F}(POS_F, t)\} := \{ATT_{SEN_F}(POS_F, t)\} \setminus \{ATT_m(POS_F)\}$ mit den Differenzattributen $\Delta ATT_{SEN_F}(POS_F, t)$ und/oder die Differenzmenge $\{\Delta ATT_{SEN_{rinf}}(POS_{SEN_{rinf}}, t)\} := \{ATT_{SEN_{rinf}}(POS_{SEN_{rinf}}, t)\} \setminus \{ATT_m(POS_{SEN_{rinf}})\}$ mit den Differenzattributen $\Delta ATT_{SEN_{rinf}}(POS_{SEN_{rinf}}, t)$ zu ermitteln; und die Differenzmengen $\{\Delta ATT_{SEN_F}(POS_F, t)\}$, $\{\Delta ATT_{SEN_{rinf}}(POS_{SEN_{rinf}}, t)\}$ in folgende zwei Klassen einzuteilen:

Klasse 1: $\{\Delta ATT_{SEN_F}(POS_F, t)\}$, $\{\Delta ATT_{SEN_{rinf}}(POS_{SEN_{rinf}}, t)\}$ = 0,

Klasse 2: $\{\Delta ATT_{SEN_F}(POS_F, t)\}$, $\{\Delta ATT_{SEN_{rinf}}(POS_{SEN_{rinf}}, t)\}$ $\neq$ 0;

und

- eine Filtereinrichtung, die mit der Auswerteeinrichtung verbunden oder verbindbar ist und die mit dem Netzwerk kommuniziert, wobei die Filtereinrichtung derart ausgeführt und eingerichtet ist, dass sie für alle in Klasse 2 klassifizierten Differenzattribute $\Delta ATT_{SEN_F}(POS_F, t)$, $\Delta ATT_{SEN_{rinf}}(POS_{SEN_{rinf}}, t)$ automatisiert und individuell die Erfüllung eines oder mehrerer vorgegebener Kriterien prüft und abhängig von der individuellen Erfüllung dieser Kriterien einen Transaktionsdatensatz zur entsprechenden Änderung der Navigationsdaten an das Netzwerk sendet.

Das Netzwerk ist vorteilhaft ein Peer-to-Peer Netzwerk. Natürlich sind auch alle weiteren heute bekannten Netzwerkstrukturen vom Erfindungsgedanken umfasst. Der Datenaustausch mit und innerhalb des Netzwerks erfolgt vorteilhaft mit Datenraten von 150 MBit/s (LTE-Netz) oder mehr, insbesondere mit Datenraten von 1 - 10 Gbit/s (5G-Netzwerk).

Die Navigationsdaten umfassen als Attribute $ATT_m(POS)$, d.h. Merkmale, vorteilhaft die für eine sichere Durchführung eines Verkehrs in dem Verkehrswegenetz erforderlichen Informationen, insbesondere Informationen über Verkehrswege des Verkehrswegenetzes, eine Verkehrswegeinfrastruktur, sowie Umgebungsinformationen entlang der Verkehrswege. Damit sind je nach Anwendung vorteilhaft Navigationsdaten umfasst, die für Fahrer-gesteuerte Fahrzeuge F und/oder teilautonom oder vollautonom fahrende Fahrzeuge F zur Navigation erforderlich sind.

Die Attribute $ATT_m(POS)$/ charakterisieren weiterhin vorteilhaft Umgebungen von Positionen POS in dem Verkehrswegenetz durch entsprechende Merkmale. Unterschiedliche Positionen POS des Verkehrswegenetzes können durch eine unterschiedliche Anzahl $M(POS)$ von Attributen/Merkmalen $ATT_m(POS)$ charakterisiert sein.

So mag sich beispielsweise für eine Position POS in einer ländlichen und eintönigen Umgebung des Verkehrswegenetzes eine kleine Anzahl $M(POS)$ von Attributen ergeben. Während sich beispielsweise für eine Position POS innerhalb eines städtischen Bereichs des Verkehrswegenetzes eine vergleichsweise größere Anzahl $M(POS)$ von Attributen ergibt. Die Navigationsdaten und damit die Attribute $ATT_m(POS)$ liegen vorteilhaft in digitaler Form vor.

Die Attribute $ATT_m(POS)$ charakterisieren vorteilhaft eine Umgebung einer Position POS in dem Verkehrswegenetz mit einem oder mehreren aus folgender nicht abschließenden Liste von Merkmalen: charakteristische Objekte und deren Merkmale, wie bspw. Gebäude, Brücken, Tunnels, Fahrspuren, Laternenmasten, Ampeln, Verkehrszeichen, Verkehrskreuzungen, Verkehrswegeführung, Fahrspuren der Verkehrswege, Signale für Verkehrsregelung/Steuerung, Abzweigungen, Fahrradwegen, Gehwegen, Bordsteine, Fahrbahnbegrenzungen, Strommasten, Leitungen, Pfosten, Absperrungen, Zäune, etc. Kanten, Spitzen etc., charakteristische Landmarken; Positionen und/oder Orientierungen der Objekte in der Umgebung; Oberflächenbeschaffenheit und/oder Bewuchs von Objekten und/oder Flächen in der Umgebung, Geländehöhen der Umgebung, Oberflächenmaterialien von Objekten und Flächen in der Umgebung, wie bspw. Metall, Beton, Stein, Asphalt, Kunststoff, Verbundmaterialien, Glas, Eis, Schnee, Wasser, Gras, etc.

Die Fahrzeuge F können Landfahrzeuge, Wasserfahrzeuge, unter Wasserfahrzeuge, oder Luftfahrzeuge sein. Die in den Navigationsdaten hinterlegten Attribute $ATT_m(POS)$ sind je nach Wahl der Fahrzeuge entsprechend gewählt. Betreffen die Navigationsdaten beispielsweise ein Verkehrswegenetz für Luftfahrzeuge, so werden beispielsweise in den Navigationsdaten Attribute hinterlegt, die Luftstraßen, unterschiedliche Lufträume, Verkehrsbeschränkungen, Auflagen für eine Nutzung bestimmter Lufträume oder Luftstraßen etc. beschreiben.

Vorteilhaft sind die Fahrzeuge F Landfahrzeuge, insbesondere Kraftfahrzeuge wie Pkws, Lkws, Busse, Motorräder, Lastenfahrräder, etc., die sich auf einem Straßenverkehrsnetz bewegen.

Erfindungsgemäß weist jedes Fahrzeug F eine Positionsermittlungseinrichtung auf, mit der die aktuelle Position $POS_F(t)$ des jeweiligen Fahrzeugs F zur Zeit t ermittelbar ist. Die Positionsermittlungseinrichtung kann beispielsweise eine Navigationssatelliten-basierte Navigationseinrichtung (beispielsweise ein GPS-, GLONAS-, Galileo-Navigationsempfänger), eine trägheitsbasierte Navigationseinrichtung, eine Navigationseinrichtung basierend auf Funkortung, eine Navigationseinrichtung basierend auf Koppelnavigation, eine Navigationseinrichtung basierend auf optischer Bilderfassung etc. oder eine Kombination davon sein.

Weiterhin erfindungsgemäß weist jedes Fahrzeug F eine Anzahl $N_F$ von Sensoren $SEN_{F,n_F}$ auf, die Sensordaten

$$DAT_{SEN_{F,n_F}}(POS_F, t)$$ jeweils von einer aktuellen Umgebung der jeweiligen Fahrzeuge F an ihren aktuellen Positionen

$POS_F(t)$ ermitteln, mit $n_F = 1, ..., N_F$ und $N_F \geq 1$. Dabei wird impliziert, dass die Fahrzeuge typischerweise zumindest einen aktivierten Sensor $SEN_{F,nF}$ aufweisen, der Sensordaten $DAT_{SEN_{F,n_F}}(POS_F, t)$ von der aktuellen Umgebung erfasst. Die Anzahl $N_F$ von Sensoren $SEN_{F,nF}$ beschreibt vorliegend insbesondere die aktiven Sensoren des jeweiligen Fahrzeugs F. Ein Fahrzeug kann daher insgesamt eine Anzahl von Sensoren aufweisen, die größer ist als die Anzahl $N_F$. Die Differenzanzahl sind dann diejenigen Sensoren die aktuell nicht aktiv sind, d.h. keine Sensordaten Anzahl $N_F$ von Sensoren $SEN_{F,nF}$ von einer aktuellen Umgebung des Fahrzeugs F erfassen.

Alternativ oder zusätzlich zu den Fahrzeugsensoren $SEN_{F,nF}$ sind in dem Verkehrswegenetz verteilt weiterhin eine Anzahl $R_{Inf}$ von Infrastruktursensoren $SEN_{r_{inf}}$ angeordnet, die Sensordaten $DAT_{SEN_{r_{inf}}}(POS_{SEN_{r_{inf}}}, t)$ jeweils von einer aktuellen Umgebung der jeweiligen Infrastruktursensoren $SEN_{r_{inf}}$ ermitteln, mit $r_{inf} = 1, ..., R_{Inf}$ und $R_{Inf} \geq 1$.

Der Begriff "Infrastruktursensoren" beschreibt vorliegend jene Sensoren, die im Verkehrswegenetz positionsfest angeordnet sind, im Vergleich zu den Fahrzeugsensoren $SEN_{F,nF}$, die mit dem jeweiligen Fahrzeug F im Verkehrswegenetz mobil sind. Die Infrastruktursensoren sind, worauf die Namensgebung hinweist, vorteilhaft jeweils an einer Infrastruktur (bzw. Infrastrukturobjekten) des Verkehrswegenetzes angeordnet, beispielsweise, sofern es sich bei dem Verkehrswegenetz um eines für Landfahrzeuge handelt, in einen Fahrbahnbelag integriert, an Ampeln, Strommasten, Fahrbahnbegrenzungen, Brücken, Schilderbrücken, Kameramasten, Verkehrszeichen etc. angeordnet.

Vorteilhaft sind die Sensoren $SEN_{F,nF}$ und/oder $SEN_{r inf}$ aus folgender, nicht abschließender Liste gewählt: Schallsensor, Ultraschallsensor, Lasersensor, LIDAR Sensor, 3D-Lasersensor, Laserscanner, Kamerasensor, 2D/3D-Kamerasenor, Time-of-Flight Kamarasensor (ToF), Radarsensor, Infrarotsensor, Ultraschallsensor, eine Kombination aus diesen Sensoren.

Das vorgeschlagene System ermöglicht mithin eine Datengenerierung $DAT_{SEN_{F,n_F}}(POS_F, t)$, $DAT_{SEN_{r inf}}(POS_{SEN_{r inf}}, t)$ entweder ausschließlich durch Fahrzeugsensoren $SEN_{F,nF}$ oder ausschließlich durch Infrastruktursensoren $SEN_{r inf}$ oder durch eine Kombination von Fahrzeugsensoren $SEN_{F,nF}$ und Infrastruktursensoren $SEN_{r inf}$.

Das vorgeschlagene System weist weiterhin eine Auswerteeinheit auf. Der Auswerteeinheit werden die ermittelten Daten $DAT_{SEN_{F,n_F}}(POS_F, t)$, $DAT_{SEN_{r inf}}(POS_{SEN_{r inf}}, t)$ bermittelt. Die Auswerteeinheit ist weiterhin mit dem Netzwerk verbunden und kann auf die in der Navigationsdatenbank hinterlegten Attribute $ATT_m(POS_F)$, $ATT_m(POS_{SEN_{r inf}})$ zugreifen. Die Auswerteeinheit ist grundsätzlich dazu ausgeführt und eingerichtet, aus den ermittelten Daten: $DAT_{SEN_{F,n_F}}(POS_F, t)$, $DAT_{SEN_{r inf}}(POS_{SEN_{r inf}}, t)$ in den Daten abgebildete Merkmale/Attribute $ATT_{SEN_F}(POS_F, t)$, $ATT_{SEN_{r inf}}(POS_{SEN_{r inf}}, t)$ zu ermitteln, diese für die Positionen $POS_F$, $POS_{SEN_{r inf}}$ jeweils ermittelten Attribute $ATT_{SEN_F}(POS_F, t)$, $ATT_{SEN_{r inf}}(POS_{SEN_{r inf}}, t)$ mit den für diese Positionen $POS_F$, $POS_{SEN_{r inf}}$ der Navigationsdatenbank hinterlegten Attribute $ATT_m(POS_F)$, $ATT_m(POS_{SEN_{r inf}})$ zu vergleichen, um entsprechende Differenzattribute $\Delta ATT_{SEN_F}(POS_F, t)$, $\Delta ATT_{SEN_{r inf}}(POS_{SEN_{r inf}}, t)$ zu ermitteln und zu klassifizieren. Sofern sich bei dem Vergleich für die entsprechenden Positionen $POS_F$, $POS_{SEN_{r inf}}$ eine Menge von Differenzattributen $\{\Delta ATT_{SEN_F}(POS_F, t)\}$ bzw. $\{\Delta ATT_{SEN_{r inf}}(POS_{SEN_{r inf}}, t)\} \neq 0$ ergeben, so werden diese Differenzattribute der Klasse zwei zugeordnet.

Handelt es sich bei einem entsprechenden Sensor beispielsweise um eine Kamera an einem Fahrzeug F, die von einer aktuellen Umgebung des Fahrzeugs F jeweils eine Zeitreihe von Bilddaten aufnimmt, so ist die Auswerteeinheit dazu ausgeführt und eingerichtet, diese Bilddaten zu analysieren, um beispielsweise in den Bilddaten abgebildete Objekte, deren Entfernung vom Sensor, deren Größe, deren Orientierung, deren Oberflächenbeschaffenheit, etc. zu ermitteln.

An diesem Beispiel lässt sich einfach erkennen, dass ein einzelner Sensor, vorliegend eine Kamera, nach Auswertung der Sensordaten durch die Auswerteeinheit, Zeitreihen von Attribute-Vektoren $ATT_{SEN_F}(POS_F, t)$ erzeugen kann, wobei ein jeweiliger Attribute-Vektor der jeweiligen Position $POS_F$ und der jeweiligen Zeit t Informationen zu in der Umgebung erkennbaren Objekten, deren Größe, deren Orientierung deren Oberflächenbeschaffenheit etc. zugeordnet.

Das vorgeschlagene System weist weiterhin erfindungsgemäß eine Filtereinrichtung auf. Diese Filtereinrichtung ist mit der Auswerteeinrichtung verbunden oder zumindest verbindbar, und ist derart ausgeführt und eingerichtet, dass Daten mit dem Netzwerk ausgetauscht werden können, d.h. die Filtereinrichtung kann mit dem Netzwerk vorteilhaft bidirektional kommunizieren.

Die Filtereinrichtung ist weiterhin derart ausgeführt und eingerichtet ist, dass sie für alle in Klasse 2 klassifizierten Differenzattribute $\Delta ATT_{SEN_F}(POS_F, t)$, $\Delta ATT_{SEN_{r inf}}(POS_{SEN_{r inf}}, t)$ automatisiert und individuell die Erfüllung eines oder mehrerer vorgegebener Kriterien prüft und abhängig von der individuellen Erfüllung dieser Kriterien einen Transaktionsdatensatz zur entsprechenden Änderung der Navigationsdaten an das Netzwerk sendet.

Der Begriff "Transaktionsdatensatz" wie auch das Merkmal einer "im Netzwerk verteilten Navigationsdatenbank" weist vorliegend auf die im vorgeschlagenen System bei der Navigationsdatenbank sowie deren Änderung genutzten "Blockchain"-Technologie hin.

Vorteilhaft weist jeder von der Filtereinrichtung an das Netzwerk gesendete Transaktionsdatensatz einen kryptographischen Hashwert des vorangegangenen Transaktionsdatensatzes, der die Navigationsdaten geändert hat, sowie einen Zeitstempel auf. Der Transaktionsdatensatz umfasst natürlich weiterhin die zu ändernden bzw. die in der Navigationsdatenbank zu ergänzenden Differenzattribute $\Delta ATT_{SEN_F}(POS_F,t)$, $\Delta ATT_{SEN_{r_{inf}}}\left(POS_{SEN_{r_{inf}}},t\right)$.

Das vorgeschlagene System ermöglicht durch die beschriebene Verwendung aktueller Sensordaten, deren Abgleich mit der verfügbaren Navigationsdatenbank und eine Änderung der Navigationsdatenbank dann, wenn ein oder mehrere vorgegebene Kriterien erfüllt sind, ein sicheres und zuverlässiges Update der im Netz verteilten Navigationsdatenbank.

Die Zuverlässigkeit der in der Navigationsdatenbank auf Basis ermittelter Differenzattribute der Klasse 2 geänderten Daten hängt wesentlich von der Wahl des oder der Kriterien ab, deren Erfüllung die Filtereinrichtung für alle in Klasse 2 klassifizierten Differenzattribute $\Delta ATT_{SEN_F}(POS_F,t)$, $\Delta ATT_{SEN_{r_{inf}}}\left(POS_{SEN_{r_{inf}}},t\right)$ automatisiert und individuell prüft und erst wenn diese Kriterien erfüllt sind einen entsprechenden Transaktionsdatensatz zur Änderung der Navigationsdaten an das Netzwerk sendet. Dabei gilt grundsätzlich, je strenger und sinnvoller die Kriterien gewählt sind, desto zuverlässiger sind die Änderungen der Navigationsdatenbank.

Nachfolgend werden einige vorteilhafte solche Kriterien genannt.

Vorteilhaft ist ein vorgegebenes Kriterium zur Auslösung einer Transaktion (d.h. eine Übermittlung eines Transaktionsdatensatzes an das Netzwerk) für ein Differenzattribut $\Delta ATT_{SEN_F}(POS_F,t)$ der Klasse 2 dadurch definiert, dass das Differenzattribut $\Delta ATT_{SEN_F}(POS_F,t)$ überhaupt Auswirkungen/Einfluss auf die Steuerung eines Fahrzeugs F im Verkehrswegenetz oder auf den Verkehr im Verkehrswegenetz hat. So werden vorteilhaft nur Merkmalsänderungen in der Umgebung berücksichtigt, die von Relevanz für die Navigation von Fahrzeugen F in dem Verkehrswegenetz sind. Damit wird bspw. ein erkanntes Differenzmerkmal, gemäß dem auf einem Feld neben einer Autobahn ein Strohballen liegt herausgefiltert und führt nicht zu einer Änderung der Navigationsdatenbank.

Für eine derartige Filterung sind entsprechende Auswertealgorithmen und Klassifizierungen erkannter Objekte bspw. in die Klassen: 1. Objekt hat Auswirkungen/Einfluss auf die Steuerung eines Fahrzeugs F im Verkehrswegenetz oder auf den Verkehr im Verkehrswegenetz oder 2. Objekt hat keine/keinen Auswirkungen/Einfluss auf die Steuerung eines Fahrzeugs F im Verkehrswegenetz oder auf den Verkehr im Verkehrswegenetz, erforderlich. Die Umsetzung dieser Filterung kann unter Nutzung von Referenztabellen und/oder selbstlernender Algorithmen erfolgen.

Vorteilhaft ist ein vorgegebenes Kriterium zur Auslösung einer Transaktion (d.h. eine Übermittlung eines Transaktionsdatensatzes an das Netzwerk) für ein Differenzattribut $\Delta ATT_{SEN_F}(POS_F,t)$ der Klasse 2 dadurch definiert, dass das Differenzattribut $\Delta ATT_{SEN_F}(POS_F,t)$ von einer vorgegebenen Anzahl unterschiedlicher Fahrzeuge F zu verschiedenen Zeiten t innerhalb eines vorgegebenen Zeitraums identisch ermittelt wurde. Damit wird eine statistische Signifikanz des Differenzattributs $\Delta ATT_{SEN_F}(POS_F,t)$ gewährleistet. Vorteilhaft hängt die Anzahl von der Art des Differenzattributs $\Delta ATT_{SEN_F}(POS_F,t)$ ab.

Vorteilhaft ist ein vorgegebenes Kriterium zur Auslösung einer Transaktion (d.h. eine Übermittlung eines Transaktionsdatensatzes an das Netzwerk) für ein Differenzattribut $\Delta ATT_{SEN_F}(POS_F,t)$ der Klasse 2 dadurch definiert, dass das Differenzattribut $\Delta ATT_{SEN_F}(POS_F,t)$ von einem vorgegebenen Prozentsatz unterschiedlicher Fahrzeuge F zu verschiedenen Zeiten in einem vorgegebenen Zeitraum identisch ermittelt wurde. Damit wird ebenfalls eine statistische Signifikanz des Differenzattributs $\Delta ATT_{SEN_F}(POS_F,t)$ gewährleistet. Vorteilhaft hängt die Wahl des Prozentsatzes von der Art des Differenzattributs $\Delta ATT_{SEN_F}(POS_F,t)$ ab.

Vorteilhaft ist ein vorgegebenes Kriterium zur Auslösung einer Transaktion für ein Differenzattribut $\Delta ATT_{SEN_{r_{inf}}}\left(POS_{SEN_{r_{inf}}},t\right)$ der Klasse 2 dadurch definiert, dass das Differenzattribut $\Delta ATT_{SEN_{r_{inf}}}\left(POS_{SEN_{r_{inf}}},t\right)$ zu verschiedenen Zeiten in einem vorgegebenen Zeitraum identisch ermittelt wurde. Damit wird eine statistische Signifikanz des Differenzattributs $\Delta ATT_{SEN_{r_{inf}}}\left(POS_{SEN_{r_{inf}}},t\right)$ gewährleistet. Vorteilhaft hängt die Wahl des Zeitraums von der Art des Differenzattributs $\Delta ATT_{SEN_{r_{inf}}}\left(POS_{SEN_{r_{inf}}},t\right)$ ab.

Vorteilhaft ist ein vorgegebenes Kriterium zur Auslösung einer Transaktion für ein Differenzattribut $\Delta ATT_{SEN_F}(POS_F,t)$ der Klasse 2 und/oder ein Differenzattribut $\Delta ATT_{SEN_{r_{inf}}}\left(POS_{SEN_{r_{inf}}},t\right)$ der Klasse 2 dadurch definiert, dass das jeweilige Differenzattribut hinsichtlich einer Schwere der Auswirkungen des jeweiligen Differenzattributs auf einen Verkehr von Fahrzeugen F einen vorgegebenen Grenzwert übersteigt. Diese vorteilhafte Weiterbildung basiert auf der Annahme, dass Änderungen der Attribute $ATT_m(POS)$ je nach konkretem Attribut, Auswirkungen auf den Verkehr von Fahrzeugen F haben können. So hat beispielsweise eine Änderung der Straßenführung, eine Sperrung eines Verkehrsweges oder eine erkannte Unfallstelle auf einem Verkehrsweg zweifelsfrei andere Auswirkungen auf den Verkehr, als eine Änderung des Farbanstrichs eines großen Gebäudes an einem Verkehrsweg. Diese Weiterbildung erlaubt eine Unterscheidung zwischen Differenzattributen, deren Auswirkungen auf einen Verkehr unterschiedlich sind. Entsprechend werden nur Änderungen an der Navigationsdatenbank für Differenzattribute durchgeführt, deren Auswirkungen auf den Verkehr einen Wert erreichen, der beispielsweise größer als ein vorgegebener Grenzwert ist.

Vorteilhaft ist ein vorgegebenes Kriterium zur Auslösung einer Transaktion für ein Differenzattribut $\Delta ATT_{SEN_F}$ $(POS_F,t)$ der Klasse 2 und/oder ein Differenzattribut $\Delta ATT_{SEN_{r_{inf}}}\left(POS_{SEN_{r_{inf}}},t\right)$ der Klasse 2 dadurch definiert, dass für die Sensoren $SEN_{F,n_F}$, $SEN_{r_{inf}}$, welche das jeweilige Differenzattribut ermittelt haben, während dessen Ermittlung kein Fehlercode generiert wurde. Dadurch wird sichergestellt, dass nur Sensordaten für Änderungen an der Navigationsdatenbank verwendet werden, die einwandfrei funktionieren, d.h. keinen entsprechenden Fehlercode generiert haben.

Eine Weiterbildung des vorgeschlagenen Systems zeichnet sich dadurch aus, dass jedes Fahrzeug F und/oder jeder Infrastruktursensor $SEN_{r_{inf}}$ eine Auswerteeinheit und/oder eine Filtereinrichtung aufweisen.

Vorteilhaft ist die Auswerteeinheit derart ausgeführt und eingerichtet, dass die Auswerteeinheit Einschränkungen eines Sichtbereichs der Sensoren $SEN_{F,n}$, $SEN_r$ ermittelt und bei der Auswertung berücksichtigt. Insbesondere ist die Auswerteeinheit derart ausgeführt, dass Sensordaten der Sensoren mit Einschränkungen des Sichtbereichs bei der Auswertung nicht berücksichtigt werden. Dadurch wird sichergestellt, dass nur Sensordaten $DAT_{SEN_{F,n_F}}\left(POS_F,t\right)$, $DAT_{SEN_{r_{inf}}}\left(POS_{SEN_{r_{inf}}},t\right)$ Eingang in die Auswertung finden, deren Sensoren keinerlei Einschränkung des Sichtbereichs aufweisen.

Eine vorteilhafte Weiterbildung des vorgeschlagenen Systems zeichnet sich dadurch aus, dass zumindest einer der Sensoren $SEN_{F,n_F}$ oder $SEN_{r_{inf}}$ zwei Betriebsmodi aufweist, einen Standard-Sense-Modus und einen High-Sense-Modus, wobei der betreffende Sensor (automatisch) im High-Sense-Modus betrieben wird, sofern für ein in einem vorgegebenen Zeitintervall [t-$\Delta$t, t[ von ihm ermitteltes Differenzattribut gilt: $\Delta ATT_{SEN_F}$ $(POS_F,t) \neq 0$, $\Delta ATT_{SEN_{r_{inf}}}\left(POS_{SEN_{r_{inf}}},t\right) \neq 0$. D.h. der betreffende Sensor wird in den High-Sense-Modus zur Zeit t geschaltet, wenn im Zeitraum von [t-$\Delta$t, t[ auf Basis der Daten des Sensors ein Differenzattribut in Klasse zwei ermittelt wurde. Der Zeitraum [t-$\Delta$t, t[ wird geeignet gewählt. Vorteilhaft ist die Wahl des Zeitraums [t-$\Delta$t, t[ abhängig vom jeweils betrachteten Attribut. Vorteilhaft wird $\Delta$t aus dem Bereich [1 sec - 10 min] gewählt.

Eine vorteilhafte Weiterbildung des vorgeschlagenen Systems zeichnet sich dadurch aus, dass zumindest einer der Sensoren $SEN_{F,n_F}$ oder $SEN_{r_{inf}}$ zwei Betriebsmodi aufweist, einen Standard-Sense-Modus und einen High-Sense-Modus, wobei der betreffende Sensor (automatisch) zunächst aktiviert und anschließend im High-Sense-Modus betrieben wird, sofern für ein in einem vorgegebenen Zeitintervall [t-$\Delta$t, t[ von ihm ermitteltes Differenzattribut gilt: $\Delta ATT_{SEN_F}(POS_F,t) \neq 0$, $\Delta ATT_{SEN_{r_{inf}}}\left(POS_{SEN_{r_{inf}}},t\right) \neq 0$. Vorteilhaft wird $\Delta$t aus dem Bereich [1 sec - 10 min] gewählt.

Eine vorteilhafte Weiterbildung des vorgeschlagenen Systems zeichnet sich dadurch aus, dass zumindest einer der Sensoren $SEN_{F,n_F}$ oder $SEN_{r_{inf}}$ zwei Betriebsmodi aufweist, einen Standard-Sense-Modus und einen High-Sense-Modus, wobei der betreffende Sensor (automatisch) im High-Sense-Modus betrieben wird, sofern für ein in einem vorgegebenen vorangehenden Zeitintervall [t-$\Delta$t, t[ von einem anderen Sensor SEN* $\in \{SEN_{F,n_F}, SEN_{r_{inf}}\}$ ermitteltes Differenzattribut gilt: $\Delta ATT_{SEN^*}(POS_{SEN^*},t) \neq 0$, wobei $POS_{SEN^*}$ in einer vorgegebenen Umgebung von $POS_F$, $POS_{SEN_{r_{inf}}}$ liegt. In dieser Weiterbildung kann somit ein Sensor $SEN_{F,n_F}$ oder $SEN_{r_{inf}}$ (automatisch) in den High-Sense-Modus geschaltet abhängig von einem Differenzattribut $\Delta ATT_{SEN^*}(POS_{SEN^*},t) \neq 0$, das basierend auf Daten eines anderen Sensors SEN* ermittelt wurde, sofern dieser andere Sensor SEN* in einer definierten Umgebung des jeweils betrachteten Sensors $SEN_{F,n_F}$ oder $SEN_{r_{inf}}$ liegt. Der andere Sensor SEN* kann beispielsweise am selben Fahrzeug, oder an einem anderen Fahrzeug angeordnet sein. Der andere Sensor kann ein Fahrzeugsensor $SEN_{F,n_F}$ oder ein Infrastruktursensor $SEN_{r_{inf}}$ sein. Vorteilhaft wird $\Delta$t aus dem Bereich [1 sec - 10 min] gewählt.

Ein entsprechender Anwendungsfall wird nachfolgend am Beispiel von zwei Fahrzeugen F1 und F2 erläutert. Das erste Fahrzeug F1 weist einen Sensor SEN* auf, auf dessen Daten basierend ein Differenzattribut $\Delta ATT_{SEN^*}(POS_{SEN^*},t) \neq 0$ ermittelt wird. An dem zweiten Fahrzeug F2, welches in einer definierten Umgebung (bspw. innerhalb eines Radius von 500 um die Position des ersten Fahrzeugs F1) fährt, werden daraufhin ein oder mehrere Sensoren $SEN_{F,n_F}$ des zweiten Fahrzeugs F2 aktiviert und in den High-Sense-Modus geschaltet. Damit wird sichergestellt, dass eine möglichst effektive Verifikation des Differenzattributs $\Delta ATT_{SEN^*}(POS_{SEN^*},t) \neq 0$ durchgeführt werden kann.

Vorteilhaft unterscheidet sich der High-Sense-Modus vom Standard-Sense-Modus zumindest durch eines der nachfolgenden nicht abschließenden Liste von Merkmalen. Im High-Sense-Modus erfolgt der Betrieb des betreffenden Sensors gegenüber dem Standard-Sense-Modus mit: einer höheren Sensorauflösung, einer höhere Sample-Rate, einer höheren Sensorempfindlichkeit, bei einem abtastenden Sensor mit einer höheren Abtastrate, bei einem abtastenden Sensor mit einer höheren Abtastenergie, einem größeren Frequenzbereich, größerem Öffnungswinkel.

Vorteilhaft werden im High-Sense-Modus bisher nicht aktivierte Sensoren $\in \{SEN_{F,nF}, SEN_{r_{inf}}\}$ aktiviert und im High-Sense-Modus betrieben, sofern die Positionen der Sensoren vorstehend aufgeführte Bedingungen erfüllen.

Vorteilhaft ist das vorgeschlagene System derart ausgeführt und eingerichtet, dass sofern ein Differenzattribut $\Delta ATT_{SEN_F}(POS_F,t)$ der Klasse 2 an der Position $POS_F$ ermittelt wird, in Fahrzeugen F an der $POS_F$ oder in einer vorgebbaren Umgebung von $POS_F$ eine Warnung, insbesondere eine vom Differenzattribut $\Delta ATT_{SEN_F}(POS_F,t)$ abhängige Warnung ausgegeben wird. Durch diese Warnung können andere Fahrzeuge, die sich der Position $POS_F$ nähern je nach Differenzattribut $\Delta ATT_{SEN_F}(POS_F,t)$ entsprechend gewarnt werden.

In einer vorteilhaften Weiterbildung ist das vorgeschlagene System derart ausgeführt und eingerichtet, dass sofern im Fall, dass für eine Position POS des Verkehrswegenetzes keine oder gemäß vorgegebener Kriterien, eine unzureichende Anzahl und/oder unsicherer Attribute $ATT_m(POS)$ in den Navigationsdaten der verteilten Datenbank vorliegen, in Fahrzeugen F an der POS oder in einer vorgebbaren Umgebung von $POS_F$ eine Warnung ausgegeben wird.

In einer vorteilhaften Weiterbildung ist das vorgeschlagene System derart ausgeführt und eingerichtet, dass sofern im Fall dass für eine Position POS keine oder gemäß vorgegebener Kriterien eine unzureichende Anzahl und/oder unsicherer Attribute $ATT_m(POS)$ in den Navigationsdaten der verteilten Datenbank vorliegen, Sensoren $SEN_{F,nF}$ oder $SEN_{r_{inf}}$ in einer vorgebbaren Umgebung um diese Position POS für einen vorgebbaren Zeitraum und/oder wiederholt in den High-Sense-Modus geschaltet werden, bis die dabei ermittelten Attribute $ATT_m(POS)$ die vorgegebenen Kriterien erfüllen.

Ein weiterer Aspekt der Erfindung betrifft ein Verfahren zum Betrieb eines Systems zum Update von Navigationsdaten. Das Verfahren umfasst folgende Schritte. In einem Schritt erfolgt ein Speichern von Navigationsdaten für Fahrzeuge F in einer in einem Netzwerk verteilten Datenbank, in der Navigationsdaten für Fahrzeuge F gespeichert sind, die sich in einem Verkehrswegenetz bewegen, wobei die Navigationsdaten für Positionen POS in dem Verkehrswegenetz jeweils eine Anzahl M(POS) den Positionen POS zugeordnete Attribute $ATT_m(POS)$ umfassen, die eine Umgebung der jeweiligen Position POS beschreiben und die für alle Position POS die Menge $\{ATT_{m=1,...M}(POS)\}$ bilden, mit m = 1, 2, ..., M; M = M(POS) und M(POS) $\geq$ 0.

In einem weiteren Schritt erfolgt durch eine Positionsermittlungseinrichtung je Fahrzeug F, ein Ermitteln der aktuellen Positionen $POS_F(t)$ des jeweiligen Fahrzeugs F, mit t: Zeit.

In einem weiteren Schritt erfolgt durch eine Anzahl $N_F$ von Sensoren $SEN_{F,nF}$ je Fahrzeug F, ein Ermitteln von Sensordaten $DAT_{SEN_{F,n_F}}(POS_F,t)$ jeweils von einer aktuellen Umgebung der jeweiligen Fahrzeuge F an ihren aktuellen Positionen $POS_F(t)$, mit $n_F$ = 1, ..., $N_F$ und $N_F \geq 1$, und/oder durch eine Anzahl $R_{Inf}$ von im Verkehrswegenetz an Positionen $POS_{SEN_{r_{inf}}}$ angeordneten Infrastruktursensoren $SEN_{r_{inf}}$ (105), ein Ermitteln von Sensordaten $DAT_{SEN_{r_{inf}}}(POS_{SEN_{r_{inf}}},t)$ jeweils von einer aktuellen Umgebung der jeweiligen Infrastruktursensoren $SEN_{r_{inf}}$ (105), mit $r_{inf}$ = 1, ..., $R_{Inf}$ und $R_{Inf} \geq 1$.

In einem weiteren Schritt erfolgt durch eine Auswerteeinheit,

- ein Ermitteln einer Menge $\{ATT_{SEN_F}(POS_F,t)\}$ aktueller Attribute $ATT_{SEN_F}(POS_F,t)$ der Umgebungen von $POS_F$ durch Auswerten der Sensordaten $DAT_{SEN_{F,n_F}}(POS_F,t)$ und/oder ein Ermitteln einer Menge $\{ATT_{SEN_{r_{inf}}}(POS_{SEN_{r_{inf}}},t)\}$ aktueller Attribute $ATT_{SEN_{r_{inf}}}(POS_{SEN_{r_{inf}}},t)$ der Umgebungen von $SEN_{r_{inf}}$ durch Auswerten der ermittelten Sensordaten $DAT_{SEN_{r_{inf}}}(POS_{SEN_{r_{inf}}},t)$;

- ein Ermitteln einer Differenzmenge $\{\Delta ATT_{SEN_F}(POS_F,t)\} := \{ATT_{SEN_F}(POS_F,t)\} \setminus \{ATT_m(POS_F)\}$ mit den Differenzattributen $\Delta ATT_{SEN_F}(POS_F,t)$ und/oder einer Differenzmenge $\{\Delta ATT_{SEN_{r_{inf}}}(POS_{SEN_{r_{inf}}},t)\} := \{ATT_{SEN_{r_{inf}}}(POS_{SEN_{r_{inf}}},t)\} \setminus \{ATT_m(POS_{SEN_{r_{inf}}})\}$ mit den Differen-

zattributen $\Delta ATT_{SEN_{r_{\text{inf}}}}\left(POS_{SEN_{r_{\text{inf}}}},t\right)$; und

- ein Einteilen der Differenzmengen $\{\Delta ATT_{SEN_F}(POS_F, t)\}$, $\{\Delta ATT_{SEN_{r_{inf}}}(POS_{SEN_{r_{inf}}}, t)\}$ in folgende zwei Klassen:

$$\text{Klasse 1:} \quad \{\Delta ATT_{SEN_F}(POS_F, t)\}, \ \{\Delta ATT_{SEN_{r_{inf}}}(POS_{SEN_{r_{inf}}}, t)\} = 0,$$

$$\text{Klasse 2:} \quad \{\Delta ATT_{SEN_F}(POS_F, t)\}, \ \{\Delta ATT_{SEN_{r_{inf}}}(POS_{SEN_{r_{inf}}}, t)\} \neq 0.$$

In einem weiteren Schritt erfolgt durch eine Filtereinrichtung, die mit der Auswerteeinrichtung verbunden oder verbindbar ist und die mit dem Netzwerk kommuniziert, für alle in Klasse 2 klassifizierten Differenzattribute $\Delta ATT_{SENF}$ $(POS_F, t)$, $\Delta ATT_{SEN_{r_{inf}}}(POS_{SEN_{r_{inf}}}, t)$ ein automatisiertes und individuelles Prüfen auf Erfüllung eines oder mehrerer vorgegebener Kriterien und abhängig von der individuellen Erfüllung dieser Kriterien ein Senden eines Transaktionsdatensatzes zur entsprechenden Änderung der Navigationsdaten an das Netzwerk.

Eine vorteilhafte Weiterbildung des vorgeschlagenen Verfahrens zeichnet sich dadurch aus, dass jeder von der Filtereinrichtung an das Netzwerk gesendete Transaktionsdatensatz einen kryptographischen Hashwert des vorangegangenen Transaktionsdatensatzes, der die Navigationsdaten geändert hat, sowie einen Zeitstempel aufweist.

Eine vorteilhafte Weiterbildung des vorgeschlagenen Verfahrens zeichnet sich dadurch aus, dass ein vorgegebenes Kriterium zur Auslösung einer Transaktion für ein Differenzattribut $\Delta ATT_{SENF}(POS_F, t)$ der Klasse 2 dadurch definiert ist, dass das Differenzattribut $\Delta ATT_{SENF}(POS_F, t)$ von einer vorgegebenen Anzahl unterschiedlicher Fahrzeuge F zu verschiedenen Zeiten in einem vorgegebenen Zeitraum identisch ermittelt wurde.

Eine vorteilhafte Weiterbildung des vorgeschlagenen Verfahrens zeichnet sich dadurch aus, dass ein vorgegebenes Kriterium zur Auslösung einer Transaktion für ein Differenzattribut $\Delta ATT_{SENF}(POS_F, t)$ der Klasse 2 dadurch definiert ist, dass das Differenzattribut $\Delta ATT_{SENF}(POS_F, t)$ von einem vorgegebenen Prozentsatz unterschiedlicher Fahrzeuge F zu verschiedenen Zeiten in einem vorgegebenen Zeitraum identisch ermittelt wurde.

Eine vorteilhafte Weiterbildung des vorgeschlagenen Verfahrens zeichnet sich dadurch aus, dass ein vorgegebenes Kriterium zur Auslösung einer Transaktion für ein Differenzattribut $\Delta ATT_{SEN_{r_{inf}}}(POS_{SEN_{r_{inf}}}, t)$ der Klasse 2 dadurch definiert ist, dass das Differenzattribut $\Delta ATT_{SEN_{r_{inf}}}(POS_{SEN_{r_{inf}}}, t)$ zu verschiedenen Zeiten in einem vorgegebenen Zeitraum identisch ermittelt wurde.

Eine vorteilhafte Weiterbildung des vorgeschlagenen Verfahrens zeichnet sich dadurch aus, dass ein vorgegebenes Kriterium zur Auslösung einer Transaktion für ein Differenzattribut $\Delta ATT_{SENF}(POS_F, t)$ der Klasse 2 und/oder ein Differenzattribut $\Delta ATT_{SEN_{r_{inf}}}(POS_{SEN_{r_{inf}}}, t)$ der Klasse 2 dadurch definiert ist, dass das jeweilige Differenzattribut hinsichtlich einer Schwere der Auswirkungen des jeweiligen Differenzattribut auf einen Verkehr von Fahrzeugen F einen vorgegebenen Grenzwert übersteigt.

Eine vorteilhafte Weiterbildung des vorgeschlagenen Verfahrens zeichnet sich dadurch aus, dass ein vorgegebenes Kriterium zur Auslösung einer Transaktion für ein Differenzattribut $\Delta ATT_{SENF}(POS_F, t)$ der Klasse 2 und/oder ein Differenzattribut $\Delta ATT_{SEN_{r_{inf}}}(POS_{SEN_{r_{inf}}}, t)$ der Klasse 2 dadurch definiert ist, dass für die Sensoren $SEN_{F,nF}$, $SEN_{r_{inf}}$, welche das jeweilige Differenzattribut ermittelt haben, während dessen Ermittlung kein Fehlercode generiert wurde.

Eine vorteilhafte Weiterbildung des vorgeschlagenen Verfahrens zeichnet sich dadurch aus, dass zumindest einer der Sensoren $SEN_{F,nF}$ oder $SEN_{r_{inf}}$ zwei Betriebsmodi aufweist, einen Standard-Sense-Modus und einen High-Sense-Modus, wobei der betreffende Sensor im High-Sense-Modus betrieben wird, sofern für ein in einem vorgegebenen Zeitintervall t - Δt von ihm ermitteltes Differenzattribut gilt:

$$\Delta ATT_{SEN_F}(POS_F, t) \neq 0, \ \Delta ATT_{SEN_{r_{inf}}}(POS_{SEN_{r_{inf}}}, t) \neq 0,$$

Eine vorteilhafte Weiterbildung des vorgeschlagenen Verfahrens zeichnet sich dadurch aus, dass zumindest einer der Sensoren $SEN_{F,nF}$ oder $SEN_{r_{inf}}$ zwei Betriebsmodi aufweist, einen Standard-Sense-Modus und einen High-Sense-Modus, wobei der betreffende Sensor im High-Sense-Modus betrieben wird, sofern für ein in einem vorgegebenen vorangehenden Zeitintervall t - Δt von einem anderen Sensor SEN* ∈ {$SEN_{F,n_F}$, $SEN_{r_{inf}}$} ermitteltes Differenzattribut gilt:

$\Delta ATT_{SEN^*}(POS_{SEN^*},t) \neq 0$, wobei $POS_{SEN^*}$ in einer vorgegebenen Umgebung von $POS_F$, $POS_{SEN_{r_{inf}}}$ liegt.

Eine vorteilhafte Weiterbildung des vorgeschlagenen Verfahrens zeichnet sich dadurch aus, dass sich der High-Sense-Modus vom Standard-Sense-Modus zumindest durch eines der folgenden Merkmale unterscheidet: im High-Sense-Modus erfolgt der Betrieb des betreffenden Sensors gegenüber dem Standard-Sense-Modus mit:

einer höheren Sensorauflösung
einer höhere Sample-Rate
einer höheren Sensorempfindlichkeit
bei einem abtastenden Sensor mit einer höheren Abtastrate
bei einem abtastenden Sensor mit einer höheren Abtastenergie,
einem größeren Frequenzbereich,
größerem Öffnungswinkel.

Vorteile des vorgeschlagenen Verfahrens ergeben sich durch sinngemäße und analoge Übertragung der zum vorgeschlagenen System gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigt:

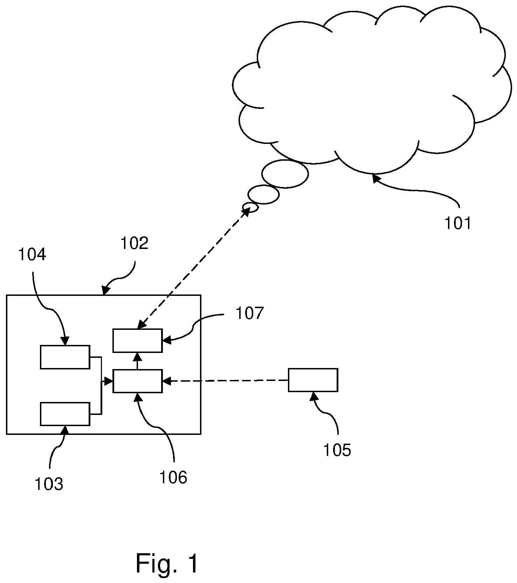

Fig. 1 einen stark schematisierten Aufbau eines erfindungsgemäßen Systems.

**Fig. 1** zeigt einen stark schematisierten Aufbau eines erfindungsgemäßen Systems zum Update von Navigationsdaten umfassend: eine in einem Netzwerk 101 verteilte Datenbank (Navigationsdatenbank), in der digitale Navigationsdaten für Fahrzeuge F 102 gespeichert sind, die sich in einem Verkehrswegenetz bewegen, wobei die Navigationsdaten für Positionen POS in dem Verkehrswegenetz jeweils eine Anzahl M(POS) den Positionen POS zugeordnete Attribute $ATT_m(POS)$ umfassen, die eine Umgebung der jeweiligen Position POS beschreiben und die für alle Position POS die Menge {$ATT_{m=1,...M}(POS)$} bilden, mit m = 1, 2, ..., M; M = M(POS) und M(POS) ≥ 0.

Jedes Fahrzeug F 102 weist eine Positionsermittlungseinrichtung 103 (vorliegend einen GPS-Empfänger) auf, die die aktuelle Positionen $POS_F(t)$ des jeweiligen Fahrzeugs F 102 ermittelt, mit t: Zeit;

Jedes Fahrzeug F 102 weist weiterhin eine Anzahl $N_F$ von Sensoren $SEN_{F,n_F}$ 104 auf, die Sensordaten $DAT_{SEN_{F,n_F}}(POS_F,t)$ jeweils von einer aktuellen Umgebung des jeweiligen Fahrzeugs F 102 an seiner aktuellen Position $POS_F(t)$ ermitteln, mit $n_F$ = 1, ..., $N_F$ und $N_F$ ≥ 1,

Das System umfasst weiterhin eine Anzahl $R_{Inf}$ von im Verkehrswegenetz an Positionen $POS_{SEN r_{inf}}$ angeordneten Infrastruktursensoren $SEN_{r_{inf}}$ 105, die Sensordaten $DAT_{SEN_{r_{inf}}}(POS_{SEN_{r_{inf}}},t)$ jeweils von einer aktuellen Umgebung der jeweiligen Infrastruktursensoren $SEN_{r_{inf}}$ 105 ermitteln, mit $r_{inf}$ = 1, ..., $R_{Inf}$ und $R_{Inf}$ ≥ 1. Die Sensordaten $DAT_{SEN_{r_{inf}}}(POS_{SEN_{r_{inf}}},t)$ werden in diesem Ausführungsbeispiel an die Auswerteeinheiten 106 in Fahrzeugen F 102 übertragen, wobei sich hierfür die Fahrzeuge F 102 in einer vorgegebenen Umgebung der jeweiligen Infrastruktursensoren $SEN_{r_{inf}}$ 105 aufhalten müssen.

Das System umfasst weiterhin je Fahrzeug F eine Auswerteeinheit 106, die dazu ausgeführt ist durch Auswertung der Sensordaten $DAT_{SEN_{F,n_F}}(POS_F,t)$ eine Menge {$ATT_{SEN_F}(POS_F,t)$} aktueller Attribute $ATT_{SEN_F}(POS_F,t)$ der Umgebungen von $POS_F$ und durch Auswertung der ermittelten Sensordaten $DAT_{SEN_{r_{inf}}}(POS_{SEN_{r_{inf}}},t)$ eine Menge {$ATT_{SEN_{r_{inf}}}(POS_{SEN_{r_{inf}}},t)$} aktueller Attribute $ATT_{SEN_{r_{inf}}}(POS_{SEN_{r_{inf}}},t)$ der Umgebungen von $SEN_{r_{inf}}$ zu ermitteln; die Differenzmenge {$\Delta ATT_{SEN_F}(POS_F,t)$} := {$ATT_{SEN_F}(POS_F,t)$} \ {$ATT_m(POS_F)$} mit den Differenzattributen $\Delta ATT_{SEN_F}(POS_F,t)$ und die Differenzmenge {$\Delta ATT_{SEN_{r_{inf}}}(POS_{SEN_{r_{inf}}},t)$} := {$ATT_{SEN_{r_{inf}}}(POS_{SEN_{r_{inf}}},t)$} \ {$ATT_m(POS_{SEN_{r_{inf}}})$} mit den Differenzattribu-

ten $\Delta ATT_{SEN_{r_{\text{inf}}}}(POS_{SEN_{r_{\text{inf}}}},t)$ zu ermitteln; und die Differenzmengen $\{\Delta ATT_{SEN_F}(POS_F,t)\}$, $\{\Delta ATT_{SEN_{r_{\text{inf}}}}(POS_{SEN_{r_{\text{inf}}}},t)\}$ in folgende zwei Klassen einzuteilen:

$$\text{Klasse 1:} \quad \{\Delta ATT_{SEN_F}(POS_F,t)\}, \{\Delta ATT_{SEN_{r_{\text{inf}}}}(POS_{SEN_{r_{\text{inf}}}},t)\} = 0,$$

$$\text{Klasse 2:} \quad \{\Delta ATT_{SEN_F}(POS_F,t)\}, \{\Delta ATT_{SEN_{r_{\text{inf}}}}(POS_{SEN_{r_{\text{inf}}}},t)\} \neq 0.$$

Das System umfasst weiterhin je Fahrzeug F 102 eine Filtereinrichtung 107, die mit der Auswerteeinrichtung 106 verbunden oder verbindbar ist und die mit dem Netzwerk 101 kommuniziert, wobei die Filtereinrichtung 107 derart ausgeführt und eingerichtet ist, dass sie für alle in Klasse 2 klassifizierten Differenzattribute $\Delta ATT_{SEN_F}(POS_F,t)$, $\Delta ATT_{SEN_{r_{\text{inf}}}}(POS_{SEN_{r_{\text{inf}}}},t)$ automatisiert und individuell die Erfüllung eines oder mehrerer vorgegebener Kriterien prüft und abhängig von der individuellen Erfüllung dieser Kriterien einen Transaktionsdatensatz zur entsprechenden Änderung der Navigationsdaten an das Netzwerk 101 sendet.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa einer weitergehenden Erläuterung in der Beschreibung, definiert wird.

Bezugszeichenliste

101 Netzwerk
102 Fahrzeuge F
103 Positionsermittlungseinrichtung
104 Sensoren $SEN_{F,nF}$ an Fahrzeugen F
105 Infrastruktursensoren $SEN_{r_{\text{inf}}}$
106 Auswerteeinheit
107 Filtereinheit

**Patentansprüche**

1. System zum Update von Navigationsdaten umfassend:

- eine in einem Netzwerk (101) verteilte Datenbank, in der Navigationsdaten für Fahrzeuge F (102) gespeichert sind, die sich in einem Verkehrswegenetz bewegen, wobei die Navigationsdaten für Positionen POS in dem Verkehrswegenetz jeweils eine Anzahl M(POS) den Positionen POS zugeordnete Attribute $ATT_m$(POS) um- fassen, die eine Umgebung der jeweiligen Position POS beschreiben und die für alle Position POS die Menge $\{ATT_{m=1,...M}(POS)\}$ bilden, mit m = 1, 2, ..., M; M = M(POS) und M(POS) $\geq$ 0,
- eine Positionsermittlungseinrichtung (103) je Fahrzeug F (102), die die aktuelle Positionen $POS_F(t)$ des jeweiligen Fahrzeugs F (102) ermittelt, mit t: Zeit,
- eine Anzahl $N_F$ von Sensoren $SEN_{F,nF}$ (104) je Fahrzeug F (102), die Sensordaten $DAT_{SEN_{F,n_F}}(POS_F,t)$ jeweils von einer aktuellen Umgebung der jeweiligen Fahrzeuge F (102) an ihren aktuellen Positionen $POS_F(t)$

ermitteln, mit $n_F$ = 1, ..., $N_F$ und $N_F \geq 1$, und/oder eine Anzahl $R_{Inf}$ von im Verkehrswegenetz an Positionen $POS_{SEN_{r_{inf}}}$ angeordneten Infrastruktursensoren $SEN_{r_{inf}}$ (105), die Sensordaten $DAT_{SEN_{r_{inf}}}(POS_{SEN_{r_{inf}}},t)$ jeweils von einer aktuellen Umgebung der jeweiligen Infrastruktursensoren $SEN_{r_{inf}}$ (105) ermitteln, mit $r_{inf}$ = 1, ..., und $R_{Inf} \geq 1$,

- eine Auswerteeinheit (106), die dazu ausgeführt ist

    - durch Auswertung der Sensordaten $DAT_{SEN_{F,n_F}}(POS_F,t)$ eine Menge $\{ATT_{SEN_F}(POS_F,t)\}$ aktueller Attribute $ATT_{SEN_F}(POS_F,t)$ der Umgebungen von $POS_F$ und/oder durch Auswertung der ermittelten Sensordaten $DAT_{SEN_{r_{inf}}}(POS_{SEN_{r_{inf}}},t)$ eine Menge $\{ATT_{SEN_{r_{inf}}}(POS_{SEN_{r_{inf}}},t)\}$ aktueller Attribute $ATT_{SEN_{r_{inf}}}(POS_{SEN_{r_{inf}}},t)$ der Umgebungen von $SEN_{r_{inf}}$ zu ermitteln;

    - die Differenzmenge $\{\Delta ATT_{SEN_F}(POS_F,t)\} := \{ATT_{SEN_F}(POS_F,t)\} \setminus \{ATT_m(POS_F)\}$ mit den Differenzattributen $\Delta ATT_{SEN_F}(POS_F,t)$ und/oder die Differenzmenge $\{\Delta ATT_{SEN_{r_{inf}}}(POS_{SEN_{r_{inf}}},t)\} := \{ATT_{SEN_{r_{inf}}}(POS_{SEN_{r_{inf}}},t)\} \setminus \{ATT_m(POS_{SEN_{r_{inf}}})\}$ mit den Differenzattributen $\Delta ATT_{SEN_{r_{inf}}}(POS_{SEN_{r_{inf}}},t)$ zu ermitteln; und

    - die Differenzmengen $\{\Delta ATT_{SEN_F}(POS_F,t)\}$, $\{\Delta ATT_{SEN_{r_{inf}}}(POS_{SEN_{r_{inf}}},t)\}$ in folgende zwei Klassen einzuteilen:

$$\text{Klasse 1:}\quad \{\Delta ATT_{SEN_F}(POS_F,t)\},\ \{\Delta ATT_{SEN_{r_{inf}}}(POS_{SEN_{r_{inf}}},t)\} = 0,$$

$$\text{Klasse 2:}\quad \{\Delta ATT_{SEN_F}(POS_F,t)\},\ \{\Delta ATT_{SEN_{r_{inf}}}(POS_{SEN_{r_{inf}}},t)\} \neq 0,$$

und

    - eine Filtereinrichtung (107), die mit der Auswerteeinrichtung (106) verbunden oder verbindbar ist und die mit dem Netzwerk (101) kommuniziert, wobei die Filtereinrichtung (107) derart ausgeführt und eingerichtet ist, dass sie für alle in Klasse 2 klassifizierten Differenzattribute $\Delta ATT_{SEN_F}(POS_F,t)$, $\Delta ATT_{SEN_{r_{inf}}}(POS_{SEN_{r_{inf}}},t)$ automatisiert und individuell die Erfüllung eines oder mehrerer vorgegebener Kriterien prüft und abhängig von der individuellen Erfüllung dieser Kriterien einen Transaktionsdatensatz zur entsprechenden Änderung der Navigationsdaten an das Netzwerk (101) sendet.

2. System nach Anspruch 1,
bei dem jeder von der Filtereinrichtung (106) an das Netzwerk (101) gesendete Transaktionsdatensatz einen kryptographischen Hashwert des vorangegangenen Transaktionsdatensatzes, der die Navigationsdaten geändert hat, sowie einen Zeitstempel aufweist.

3. System nach Anspruch 1 oder 2,
bei dem ein vorgegebenes Kriterium zur Auslösung einer Transaktion für ein Differenzattribut $\Delta ATT_{SEN_F}(POS_F,t)$ der Klasse 2 dadurch definiert ist, dass das Differenzattribut $\Delta ATT_{SEN_F}(POS_F,t)$ von einer vorgegebenen Anzahl unterschiedlicher Fahrzeuge F zu verschiedenen Zeiten in einem vorgegebenen Zeitraum identisch ermittelt wurde.

4. System nach einem der Ansprüche 1 bis 3,
bei dem ein vorgegebenes Kriterium zur Auslösung einer Transaktion für ein Differenzattribut $\Delta ATT_{SEN_F}(POS_F,t)$ der Klasse 2 dadurch definiert ist, dass das Differenzattribut $\Delta ATT_{SEN_F}(POS_F,t)$ von einem vorgegebenen Prozentsatz unterschiedlicher Fahrzeuge F zu verschiedenen Zeiten in einem vorgegebenen Zeitraum identisch ermittelt wurde.

**5.** System nach einem der Ansprüche 1 bis 4,
bei dem ein vorgegebenes Kriterium zur Auslösung einer Transaktion für ein Differenzattribut $\Delta ATT_{SEN_{r_{inf}}}(POS_{SEN_{r_{inf}}},t)$ der Klasse 2 dadurch definiert ist, dass das Differenzattribut $\Delta ATT_{SEN_{r_{inf}}}(POS_{SEN_{r_{inf}}},t)$ zu verschiedenen Zeiten in einem vorgegebenen Zeitraum identisch ermittelt wurde.

**6.** System nach einem der Ansprüche 1 bis 5,
bei dem ein vorgegebenes Kriterium zur Auslösung einer Transaktion für ein Differenzattribut $\Delta ATT_{SEN_F}(POS_F,t)$ der Klasse 2 und/oder ein Differenzattribut $\Delta ATT_{SEN_{r_{inf}}}(POS_{SEN_{r_{inf}}},t)$ der Klasse 2 dadurch definiert ist, dass das jeweilige Differenzattribut hinsichtlich einer Schwere der Auswirkungen des jeweiligen Differenzattribut auf einen Verkehr von Fahrzeugen F einen vorgegebenen Grenzwert übersteigt.

**7.** System nach einem der Ansprüche 1 bis 6,
bei dem ein vorgegebenes Kriterium zur Auslösung einer Transaktion für ein Differenzattribut $\Delta ATT_{SEN_F}(POS_F,t)$ der Klasse 2 und/oder ein Differenzattribut $\Delta ATT_{SEN_{r_{inf}}}(POS_{SEN_{r_{inf}}},t)$ der Klasse 2 dadurch definiert ist, dass für die Sensoren $SEN_{F,nF}$, $SEN_{r_{inf}}$, welche das jeweilige Differenzattribut ermittelt haben, während dessen Ermittlung kein Fehlercode generiert wurde.

**8.** System nach einem der Ansprüche 1 bis 7,
bei dem zumindest einer der Sensoren $SEN_{F,nF}$ oder $SEN_{r_{inf}}$ zwei Betriebsmodi aufweist, einen Standard-Sense-Modus und einen High-Sense-Modus, wobei der betreffende Sensor im High-Sense-Modus betrieben wird, sofern für ein in einem vorgegebenen Zeitintervall t - $\Delta$t von ihm ermitteltes Differenzattribut gilt:

$$\Delta ATT_{SEN_F}(POS_F,t) \neq 0, \ \Delta ATT_{SEN_{r_{inf}}}(POS_{SEN_{r_{inf}}},t) \neq 0,$$

**9.** System nach einem der Ansprüche 1 bis 8,
bei dem zumindest einer der Sensoren $SEN_{F,nF}$ oder $SEN_{r_{inf}}$ zwei Betriebsmodi aufweist, einen Standard-Sense-Modus und einen High-Sense-Modus, wobei der betreffende Sensor im High-Sense-Modus betrieben wird, sofern für ein in einem vorgegebenen vorangehenden Zeitintervall t - $\Delta$t von einem anderen Sensor SEN* $\in \{SEN_{F,nF}, SEN_{r_{inf}}\}$ ermitteltes Differenzattribut gilt: $\Delta ATT_{SEN^*}(POS_{SEN^*},t) \neq 0$, wobei $POS_{SEN^*}$ in einer vorgegebenen Umgebung von $POS_F$, $POS_{SEN_{r_{inf}}}$ liegt.

**10.** System nach einem der Ansprüche 8 oder 9,
bei dem sich der High-Sense-Modus vom Standard-Sense-Modus zumindest durch eines der folgenden Merkmale unterscheidet: im High-Sense-Modus erfolgt der Betrieb des betreffenden Sensors gegenüber dem Standard-Sense-Modus mit:

- einer höheren Sensorauflösung
- einer höhere Sample-Rate
- einer höheren Sensorempfindlichkeit
- bei einem abtastenden Sensor mit einer höheren Abtastrate
- bei einem abtastenden Sensor mit einer höheren Abtastenergie,
- einem größeren Frequenzbereich,
- größerem Öffnungswinkel.

**11.** Verfahren zum Betrieb eines Systems zum Update von Navigationsdaten, umfassend folgende Schritte:

- Speichern von Navigationsdaten für Fahrzeuge F, die sich in einem Verkehrswegenetz bewegen, in einer in einem Netzwerk verteilten Datenbank, wobei die Navigationsdaten für Positionen POS in dem Verkehrswegenetz jeweils eine Anzahl M(POS) den Positionen POS zugeordnete Attribute $ATT_m(POS)$ umfassen, die eine Umgebung der jeweiligen Position POS beschreiben und die für alle Position POS die Menge $\{ATT_{m=1,...M}(POS)\}$

bilden, mit m = 1, 2, ..., M; M = M(POS) und M(POS) $\geq$ 0,

- durch eine Positionsermittlungseinrichtung je Fahrzeug F Ermitteln der aktuellen Positionen $POS_F(t)$ des jeweiligen Fahrzeugs F, mit t: Zeit;

- durch eine Anzahl $N_F$ von Sensoren $SEN_{F,n_F}$ je Fahrzeug F Ermitteln von Sensordaten $DAT_{SEN_{F,n_F}}(POS_F,t)$ jeweils von einer aktuellen Umgebung der jeweiligen Fahrzeuge F an ihren aktuellen Positionen $POS_F(t)$, mit $n_F$ = 1, ..., $N_F$ und $N_F \geq$ 1, und/oder durch eine Anzahl $R_{Inf}$ von im Verkehrswegenetz an Positionen $POS_{SEN_{r_{inf}}}$ angeordneten Infrastruktursensoren $SEN_{r_{inf}}$ (105) Ermitteln von Sensordaten $DAT_{SEN_{r_{inf}}}(POS_{SEN_{r_{inf}}},t)$ jeweils von einer aktuellen Umgebung der jeweiligen Infrastruktursensoren $SEN_{r_{inf}}$ (105), mit $r_{inf}$ = 1, ..., $R_{Inf}$ und $R_{Inf} \geq$ 1;

- durch eine Auswerteeinheit,

    - Ermitteln einer Menge $\{ATT_{SEN_F}(POS_F,t)\}$ aktueller Attribute $ATT_{SEN_F}(POS_F,t)$ der Umgebungen von $POS_F$ durch Auswerten der Sensordaten $DAT_{SEN_{F,n_F}}(POS_F,t)$ und/oder ein Ermitteln einer Menge $\{ATT_{SEN_{r_{inf}}}(POS_{SEN_{r_{inf}}},t)\}$ aktueller Attribute $ATT_{SEN_{r_{inf}}}(POS_{SEN_{r_{inf}}},t)$ der Umgebungen von $SEN_{r_{inf}}$ durch Auswertrn der ermittelten Sensordaten $DAT_{SEN_{r_{inf}}}(POS_{SEN_{r_{inf}}},t)$;

    - Ermitteln einer Differenzmenge $\{\Delta ATT_{SEN_F}(POS_F,t)\} := \{ATT_{SEN_F}(POS_F,t)\} \setminus \{ATT_m(POS_F)\}$ mit den Differenzattributen $\Delta ATT_{SEN_F}(POS_F,t)$ und/oder einer Differenzmenge $\{\Delta ATT_{SEN_{r_{inf}}}(POS_{SEN_{r_{inf}}},t)\} := \{ATT_{SEN_{r_{inf}}}(POS_{SEN_{r_{inf}}},t)\} \setminus \{ATT_m(POS_{SEN_{r_{inf}}})\}$ mit den Differenzattributen $\Delta ATT_{SEN_{r_{inf}}}(POS_{SEN_{r_{inf}}},t)$; und

    - Einteilen der Differenzmengen $\{\Delta ATT_{SEN_F}(POS_F,t)\}$, $\{\Delta ATT_{SEN_{r_{inf}}}(POS_{SEN_{r_{inf}}},t)\}$ in folgende zwei Klassen:

$$\text{Klasse 1:} \quad \{\Delta ATT_{SEN_F}(POS_F,t)\},\ \{\Delta ATT_{SEN_{r_{inf}}}(POS_{SEN_{r_{inf}}},t)\} = 0,$$

$$\text{Klasse 2:} \quad \{\Delta ATT_{SEN_F}(POS_F,t)\},\ \{\Delta ATT_{SEN_{r_{inf}}}(POS_{SEN_{r_{inf}}},t)\} \neq 0;$$

und

- durch eine Filtereinrichtung, die mit der Auswerteeinrichtung verbunden oder verbindbar ist und die mit dem Netzwerk kommuniziert, für alle in Klasse 2 klassifizierten Differenzattribute $\Delta ATT_{SEN_F}(POS_F,t)$, $\Delta ATT_{SEN_{r_{inf}}}(POS_{SEN_{r_{inf}}},t)$ automatisiertes und individuelles Prüfen auf Erfüllung eines oder mehrerer vorgegebener Kriterien und abhängig von der individuellen Erfüllung dieser Kriterien Senden eines Transaktionsdatensatzes zur entsprechenden Änderung der Navigationsdaten an das Netzwerk.

**12.** Verfahren nach Anspruch 11,
bei dem jeder von der Filtereinrichtung an das Netzwerk gesendete Transaktionsdatensatz einen kryptographischen Hashwert des vorangegangenen Transaktionsdatensatzes, der die Navigationsdaten geändert hat, sowie einen Zeitstempel aufweist.

**13.** Verfahren nach einem der Ansprüche 11 bis 12,
bei dem ein vorgegebenes Kriterium zur Auslösung einer Transaktion für ein Differenzattribut $\Delta ATT_{SEN_F}(POS_F,t)$ der Klasse 2 und/oder ein Differenzattribut $\Delta ATT_{SEN_{r_{inf}}}(POS_{SEN_{r_{inf}}},t)$ der Klasse 2 dadurch definiert ist, dass für die Sensoren $SEN_{F,n_F}$, $SEN_{r_{inf}}$, welche das jeweilige Differenzattribut ermittelt haben, während dessen Ermittlung kein Fehlercode generiert wurde.

14. Verfahren nach einem der Ansprüche 11 bis 13,
bei dem zumindest einer der Sensoren $SEN_{F,nF}$ oder $SEN_{r_{inf}}$ zwei Betriebsmodi aufweist, einen Standard-Sense-Modus und einen High-Sense-Modus, wobei der betreffende Sensor im High-Sense-Modus betrieben wird, sofern für ein in einem vorgegebenen Zeitintervall t - Δt von ihm ermitteltes Differenzattribut gilt:

$$\Delta ATT_{SEN_F}(POS_F, t) \neq 0, \ \Delta ATT_{SEN_{r_{inf}}}(POS_{SEN_{r_{inf}}}, t) \neq 0,$$

15. Verfahren nach einem der Ansprüche 11 bis 14,
bei dem zumindest einer der Sensoren $SEN_{F,nF}$ oder $SEN_{r_{inf}}$ zwei Betriebsmodi aufweist, einen Standard-Sense-Modus und einen High-Sense-Modus, wobei der betreffende Sensor im High-Sense-Modus betrieben wird, sofern für ein in einem vorgegebenen vorangehenden Zeitintervall t - Δt von einem anderen Sensor SEN* ∈ {$SEN_{F,nF}$, $SEN_{r_{inf}}$} ermitteltes Differenzattribut gilt: $\Delta ATT_{SEN*}(POS_{SEN*}, t) \neq 0$, wobei $POS_{SEN*}$ in einer vorgegebenen Umgebung von $POS_F$, $POS_{SEN_{r_{inf}}}$ liegt.

Fig. 1